# EUROPEAN PATENT APPLICATION

(11) **EP 4 755 576 A1**
(43) Date of publication of application: **10.06.2026**
(21) Application number: 25220521.6
(22) Date of filing: 03.12.2025
(51) Int. Cl.: B23Q 17/22, B23Q 17/24

(54) **MACHINING CENTRE FOR MACHINING A WOODEN PART AND METHOD FOR DETERMINING THE POSITION OF A PART ON A WORK TABLE OF A MACHINING CENTRE FOR MACHINING A WOODEN PART**

(30) Priority: 09.12.2024 IT 202400027879
(71) Applicant: SCM Group S.p.A., 47921 Rimini (RN) (IT)
(72) Inventor: BIANCONI, Francesco, 47921 Rimini (RN) (IT)
(74) Representative: Gallo, Gianluca

(57) **Abstract**

Described is a machining centre (C) for machining a wooden part (P), or the like, comprising a work table (100) for supporting the part (P) and a machining unit (200), movable with respect to the part (P) and configured to carry out at least one machining operation on the part (P). The machining centre (C) further comprises a first device (400) configured to determine a position of the part (P) on the work table (100). The first device (400) is characterized by a first degree of precision. The machining centre (C) further comprises a second device (500) movable with respect to the part (P) on the basis of the position determined by the first device (400). The second device (500) is configured to determine a position of the part (P) on the work table (100). The second device (500) is characterized by a second degree of precision greater than the first degree of precision. The machining unit (200) is movable with respect to the part (P) on the basis of the position determined by the second device (500) to carry out the at least one machining operation.

## Description

The present invention relates to a machining centre for machining a wooden part and a method for determining the position of a part on a work table of a machining centre for machining a wooden part.

Machining centres for machining a wooden part are currently known, comprising a work table, on which the part to be machined is rested, and a machining station, positioned above than the work table and comprising a movable machining head and configured to carry out at least one machining operation on the part.

As is known, for the machining head to carry out a correct machining of the part, it is necessary to know the position of the part on the work table and its dimensions, for example, nominal or real. In this regard, it is currently known to use contact elements, positioned on the work table and having a reference function, against which the part is placed so that it occupies a predetermined position on the work table, that is, a known position, and correct for its machining.

Disadvantageously, for particularly large parts, such as wooden beams or entire wooden walls for pre-fabricated buildings, the contact elements cannot guarantee the correct positioning of the part since, given the large size and weight of the latter, the contact elements can be bent, deformed or broken.

For particularly large parts, systems for positioning the part on the work table are also currently known, which comprise a projector configured to project, in a predetermined position of the work table, an image defining an area for positioning the part. In this situation, once the image is projected, the part is positioned and oriented on the work table so as to substantially overlay the projected image.

Disadvantageously, since the part is large and the work table is particularly extensive, these systems are not very precise and not very reliable.

In other words, such systems allow a rather imprecise positioning of the part. This results, at the time of subsequent machining by the machining head, in errors in the machining itself.

The technical purpose of the present invention is therefore to provide a machining centre for machining a wooden part and a method for determining the position of a part on a work table of a machining centre for machining a wooden part that are able to overcome the drawbacks arising from the prior art.

The aim of the present invention is therefore to provide a machining centre for machining a wooden part in which it is possible to reliably determine the position of the part on the work table.

A further aim of the present invention is therefore to provide a machining centre for machining a wooden part precisely in the machining of the part. A further aim of the present invention is to provide a method for determining the position of a part on a work able of a machining centre for machining a wooden part in a precise and reliable manner.

The specified technical purpose and the specified aims are substantially achieved by a machining centre for machining a wooden part and by a method for determining the position of a part on a work table of a machining centre for machining a wooden part comprising the technical features set forth in one or more of the appended claims. The dependent claims correspond to possible embodiments of the invention.

In particular, the technical purpose specified and the aims specified are achieved by a machining centre for machining a wooden part according to the present invention.

The machining centre according to the present invention comprises a work table for supporting the part and a machining unit movable with respect to the part and configured to carry out at least one machining operation on the part.

Preferably, the machining unit comprises a machining head movable with respect to the part and configured to carry out the at least one machining operation on the part.

Preferably, the machining unit is positioned above the work table. Preferably, the machining unit is movable in a sliding fashion along tracks extending parallel to a main direction of extension of the work table.

The machining centre further comprises a first device configured to determine a position of the part on the work table. The first device is characterized by a first degree of precision.

In other words, the first device determines the position of the part on the work table with a first degree of precision.

Preferably, the first device operates without contact with the part.

In other words, the first device determines the position of the part on the work table without "touching" the part itself.

Preferably, the first device is positioned above the work table. In particular, the first device is positioned above the machining unit in such a way as not to interfere with the machining unit during the machining of the part by the machining unit itself.

Preferably, the first device is selectable from one or more of the following devices: optical sensor, laser sensor, photocell, video camera, image projector.

In accordance with a possible embodiment, the first device comprises an image projector configured to project, in a predetermined position of the work table, an image defining a positioning area of the part (which can also include the desired machining of the part) so as to guide an operator in the positioning the part at the predetermined position.

In particular, the image projector projects, in a predetermined position of the work table, an image having the shape and size of the part. In this situation, once the image is projected on the work table, the operator has clear references with respect to which to position, for example through the aid of automated means, the part. In doing so, the part overlays the image so that it is oriented and positioned on the work table in a manner corresponding to the image.

In such a situation, determining the position of the part consists of projecting the image and overlaying the part on the projected image so that the contours of the image correspond to those of the part and the part lies within the area defined by the image.

The term "guiding an operator" means that the image projected on the work table clearly indicates to the operator where to position the part on the work table and how to orient it. In this situation, the operator is able to move the part, for example by means of movement means such as mechanical arms or gantry cranes, in such a way that the part is positioned so as to overlap the projected image.

In another example, the operator can position the part on the work table, for example, near or at the position indicated by the image projected by the laser. Once the part has been positioned, the operator can move, for example roto-translate, the image projected by the laser, defined as nominal position and orientation, until it coincides with the part positioned on the work table, in order to determine the actual position and orientation. The movement of the image projected by the laser can take place, for example, by means of a controller. In this way, the actual position and orientation of the part on the work table, that is, the deviation of the actual position and orientation from the nominal position and orientation, can be determined. The machining centre can, therefore, be configured to compensate the program (that is to modify the part machining instructions) as a function of the actual position and orientation detected, that is, as a function of the detected deviation between the position and the actual orientation and the position and the nominal orientation.

In accordance with a further possible alternative embodiment to that of the image projector, the first device comprises a position measuring device configured to measure a position of at least a portion of the part. In accordance with this embodiment, the machining centre, and in particular a relative processing unit, is configured to process the measured position to obtain the position of the part on the work table.

Preferably, the position measuring device is configured to measure a position of a plurality of portions of the part and to send the measured positions to the machining centre which processes them so as to determine the dimensions of the part, its geometry (for example, its shape) and its position on the work table.

The machining centre further comprises a second device movable relative to the part on the basis of the position determined by the first device.

In other words, the second device is moved relative to the part based on the position of the part determined by the first device.

The second device is also configured to determine the position of the part on the work table.

The second device is characterized by a second degree of precision greater than the first degree of precision, that is, the degree of precision of the first device.

In other words, the second device determines the position of the part on the work table with greater precision than the precision with which the first device determines that position.

Preferably, the second device is part of a precision class higher than the precision class to which the first device belongs.

The first device determines the position of the part on the work table with a lower degree of precision than that of the second device but this allows to start having a general information about the positioning of the part on the work table. Subsequently, on the basis of this information, the second device is moved, preferably so as to be positioned closer to the part. In fact, since the second device has a higher degree of precision than the first, it needs to be closer to the part in order to determine the position of the part. Once the second device has been positioned and once it has determined the position of the part, on the basis of the latter determination of the position, the machining unit is moved and the machining of the part can begin.

Preferably, the second device is integral with the machining unit. This means that, once the position of the part has been determined by the first device, the second device and the machining unit are moved on the basis of that position. Subsequently, the second device determines the position of the part and, on the basis of this determination, the second device and the machining unit are again moved.

Preferably, once the position of the part has been determined by the second device, it is the machining head of the machining unit that moves with respect to the part on the basis of this determination.

Preferably, the second device operates without contact with the part. Alternatively, the second device operates in contact with the part. Preferably, the second device is selectable from one or more of: mechanical sensor, high-resolution camera, laser sensor and LIDAR.

According to an embodiment of the invention, the second device comprises a position measuring device configured to measure a position of at least a portion of the part. In this situation, the machining centre, and in particular the relative processing unit, is configured to process the at least one measured position to obtain the position of the part on the work table. Preferably, the position measuring device of the second device is configured to measure a plurality of positions relative to a plurality of portions of the part and the machining centre, in particular the processing unit, is configured to process the plurality of measured positions to determine, in addition to the position of the part on the work table, the geometry, that is, the shape and dimensions, of the part.

In other words, by means of the processing the detected positions it is possible to carry out a sort of reconstruction of the part from which its geometry can be derived.

In use, the normally large part is positioned on the equally large work table, and there is a need to determine where on the work table the part has been placed. In this situation, the first device makes it possible to determine the position of the part on the work table. This determination is such as to allow "general information" to be obtained, that is, position data that is not particularly precise, regarding the location of the part on the work table. On the basis of this determination it is, however, possible to move the second device towards the part.

In other words, since the "general" position of the part on the work table is known, the second device, having a higher degree of precision than the first device and therefore needing, in order to determine the position of the part, to be closer to the part, is moved on the basis of the position determined by the first device.

Once the second device is suitably positioned, it determines, with the second degree of precision (greater than the first degree of precision), the position of the part. In such a situation, the position of the part on the work table has been determined with a high degree of precision. Subsequently, the machining unit is moved, on the basis of the position determined by the second device, towards the part so as to perform at least one machining operation on the part.

Advantageously, the combined use of two devices with different degrees of precision allows, by means of the device with a lower degree of precision, the entire work table to be "analysed" to begin to identify the position of the part and, by means of the device with a higher degree of precision, to appropriately move the machining unit so that the machining operation is carried out on the part in a precise manner.

The specified technical purpose and the specified aims are further achieved by the method for determining the position of a part on a work table of a machining centre for machining a wooden part, or the like, according to the present invention.

In particular, the machining centre is made in accordance with the present invention.

The method comprises a step of determining a position of the part on the work table by means of a first device configured to determine a position of the part with a first degree of precision.

According to an embodiment, the step of determining the position of the part by means of the first device comprises a sub-step of projecting, at a predetermined position of the work table, an image defining a positioning area of the part, in particular an image having the shape and size of the part, and a sub-step of positioning the part at the predetermined position. According to a further embodiment, the step of determining the position of the part by means of the first device comprises a sub-step of projecting, at a predetermined position of the work table, an image defining a positioning area of the part, in particular an image having the shape and size of the part, and a sub-step of moving the image until it coincides with the part positioned on the work table.

The sub-step of positioning the part can take place by sending a series of movement instructions to the movement means to position the part so as to overlay the projected image.

Alternatively, the step of determining the position of the part by the first device comprises a step of measuring/detecting a plurality of positions relative to a plurality of portions of the part and a sub-step of processing the plurality of measured positions to determine the geometry, that is, shape and dimensions, of the part and the position of the part on the work table. The method further comprises a step of determining the position of the part on the work table by a second device configured to determine the position of the part with a second degree of precision greater than the first degree of precision.

Preferably, the step of determining a position of the part by the second device is subsequent to the step of determining the position of the part by the first device.

Alternatively, the step of determining the position of the part by the second device comprises a step of measuring a plurality of positions relative to a plurality of portions of the part and a sub-step of processing the plurality of measured positions to determine the geometry, that is, shape and dimensions, of the part and the position of the part on the work table.

The method further comprises a step of deriving, on the basis of the position of the part determined by the first device, movement instructions for the second device and a step of deriving, on the basis of the position of the part determined by the second device, movement instructions for a machining unit of the machining centre movable with respect to the part and configured to carry out at least one machining operation on the part.

Preferably, between the step of deriving movement instructions for the second device and the step of deriving movement instructions for the machining unit, the method comprises a step of moving the second device with respect to the part on the basis of the position of the part determined by the first device.

In other words, once the position of the part has been determined by the first device, the second device is moved relative to the part on the basis of the position derived from the first device. In doing so, the second device is brought closer to the part. In fact, since the second device has a higher degree of precision than the first device, it needs to be closer to the part in order to determine the position.

Preferably, after the step of deriving the movement instructions for the machining unit, the method comprises a step of moving the machining unit with respect to the part on the basis of the position determined by the second device and a step of carrying the at least one machining operation. In accordance with an embodiment, the second device is integral with the machining unit and therefore, in the phase of moving the second device, the machining unit is also moved and in the phase of moving the machining unit, the second device is also moved.

Advantageously, the use of two devices, one having a higher degree of precision than the other, allows the position of the part, especially large parts, on the work table to be determined with precision and reliability. The first device in fact makes it possible to determine, albeit with a limited precision, the position of the part on the work top despite both the part and the work table having considerable dimensions. Thanks to this position data, it is possible to place the second device, which needs to be closer to the part in order to determine the position, so that it is close to the part and can carry out a more precise and "fine" determination of the position of the part. Further characteristics and advantages of the present invention will become clearer from the indicative, and therefore non-limiting, description of an embodiment of a machining centre for machining a wooden part and of a method for determining the position of a part on a work table of a machining centre for machining a wooden part.

This description is set out below with reference to the accompanying drawings which are provided solely for illustrative and therefore non-limiting purposes, in which:
- Figure 1 shows a perspective view of a machining centre according to the invention;
- Figure 2 shows a perspective view of a machining centre according to the present invention from which a part of the machining unit has been removed;

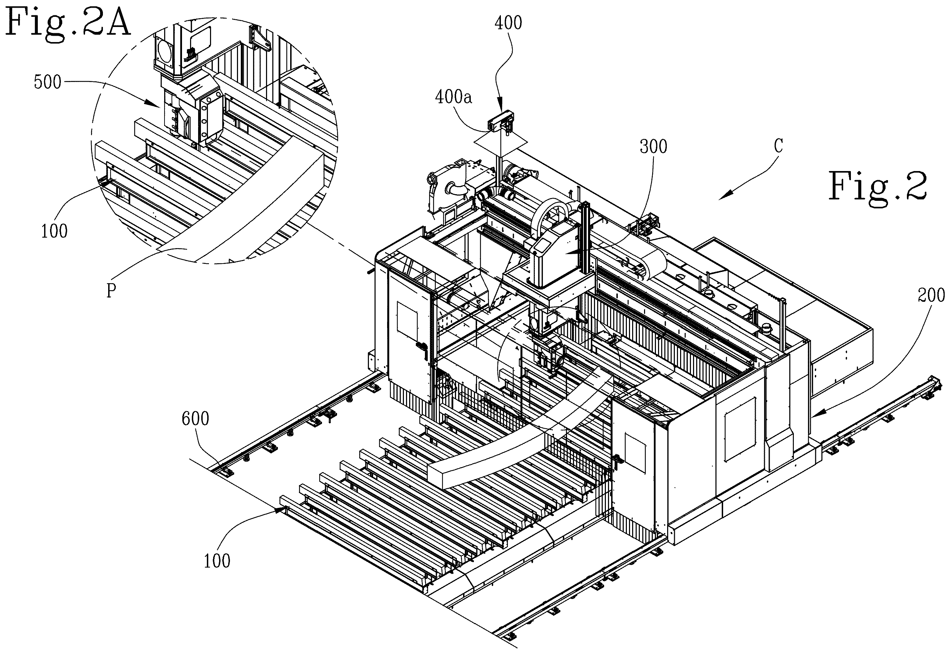

- Figure 2 shows a detail of Figure 2.

The accompanying drawings indicates a machining centre for machining a wooden part "P" , or the like, with the reference "C".

By way of example and without limiting the scope of the invention, the part "P" shown in the accompanying figures is a large beam.

The machining centre "C" may comprise a work table 100 for supporting the part "P". The work table 100 may comprise , for example, a multifunction table, a suction cup table, a bar table, a continuous table or a flooring supporting the machining centre "C" itself, configured to support and/or retain the part.

By way of example and without limiting the scope of the invention, the work table 100 shown in the accompanying drawings has a main direction of extension parallel to the main direction of extension of the part "P".

By way of example and without limiting the scope of the invention, the work table 100 shown in the accompanying drawings is defined by a series of supports extending transversely to the main direction of extension of the work table 100.

The machining centre "C" also includes a machining unit 200 movable with respect to the part "P" and configured to carry out at least one machining operation on the part "P".

Preferably, the machining unit 200 is positioned above than the work table 100.

In the illustrated embodiment, the machining unit 200 moves along the main direction of extension of the work table 100.

In the illustrated embodiment, the machining unit 200 moves along tracks/rails 600 positioned on the sides of the work table 100.

In the illustrated embodiment, the machining unit 200 comprises a machining head 300 configured to carry out at least one machining operation on the part "P".

In the illustrated embodiment, the machining head 300 is movable with respect to the part "P", in particular, along three Cartesian axes, more particularly along three Cartesian axes and two or more rotation axes. The machining centre "C" further comprises a first device 400 configured to determine a position of the part "P" on the work table 100.

Preferably, the first device 400 is positioned above the work table 100, in particular above the machining unit 200, in such a way as not to interfere with the machining unit 200 during the machining of the part "P" by the machining unit 200.

By way of example and without limiting the scope of the invention, the first device 400 could be positioned on the ceiling of the location where the machining centre "C" is placed in use.

The first device 400 is characterized by a first degree of precision, that is, the first device 400 detects the position of the part "P" on the work table 100 with a first degree of precision.

Preferably, the first device 400 operates without contact with the part "P".

Preferably, the first device 400 is selectable from one or more of the following devices: optical sensor, laser sensor, photocell, video camera, image projector.

Even more preferably, the first device 400 comprises an image projector 400a configured to project, in a predetermined position of the work table 100, an image defining a positioning area of the part "P", in particular an image having the shape and size of the part "P", so as to guide an operator in positioning the part "P" at the predetermined position.

In this situation, the first device 400 determines the position of the part "P" in the sense that it projects the image on the work table 100 and the part "P" is moved so as to overlap this image as precisely as possible.

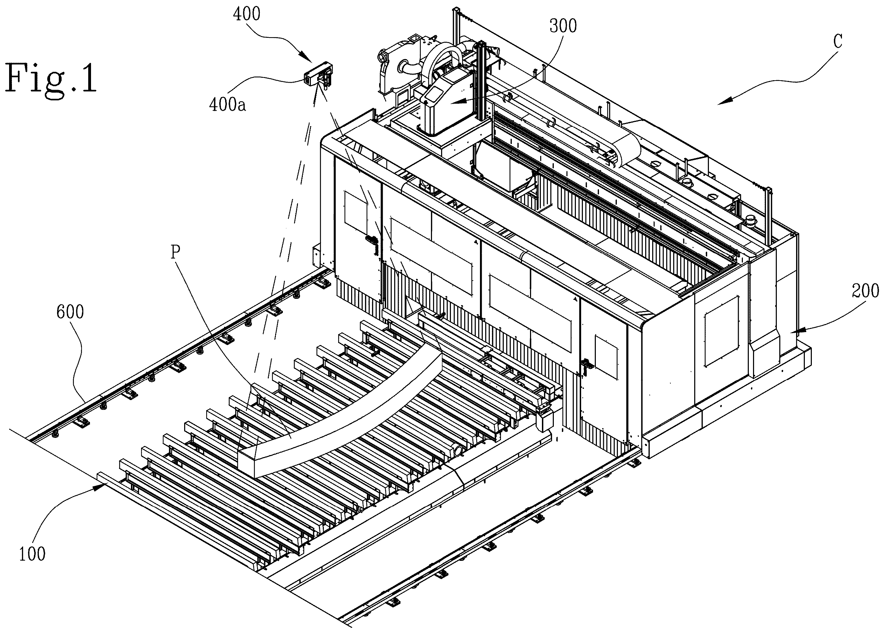

In use, once the image projector 400a has projected on the work table the image defining the positioning area of the part "P", the part "P" is placed in this area, for example using mechanical arms and the like, in such a way that the contours of the part match with those of the projected image (indicated in the accompanying drawings with a dashed line) and the part "P" is positioned within the area delimited by the contours of the image (Figure 1).

In another situation, the first device 400 determines the position of the part "P" in the sense that the part "P" is positioned on the work table 100, for example, in correspondence with the image projected on the work table 100, and this image is subsequently moved so as to overlay as precisely as possible said part "P" positioned on the work table 100. According to an embodiment not illustrated and alternative to the image projector, the first device 400 comprises a position measuring unit configured to measure a position of at least a portion of the part "P". In this embodiment, the machining centre "C" is configured to process the measured position to obtain the position of the part "P" on the work table 100. In this situation, the first device 400 determines the position of the part "P" in the sense that it detects the position of at least a portion of the part "P" which is then processed to determine the position of the part "P" on the work table 100.

Preferably, the position measuring device is configured to measure a plurality of positions relative to a plurality of portions of the part "P" and the machining centre "C" is configured to process the plurality of measured positions to determine the position of the part "P" on the work table 100.

Preferably, the machining centre "C" is also configured to determine, on the basis of the plurality of measured positions, the geometry, that is the shape and dimensions, of the part "P".

The machining centre "C" also comprises a second device 500 movable with respect to the part "P" on the basis of the position determined by the first device 400.

In other words, once the position of the part "P" is determined by the first device 400, the second device 500 is moved as a function of that position. The second device 500 is configured to determine the position of the part "P" on the work table 100.

The second device 500 is characterized by a second degree of precision greater than the first degree of precision.

In other words, the position of the part "P" determined with the second device 500 is more precise than the position of the part "P" determined with the first device 400.

The second device 500 is movable with respect to the part "P" on the basis of the position determined by the first device 400.

The machining unit 200 is movable with respect to the part "P" on the basis of the position determined by the second device 500 to carry out the at least one machining operation.

In use, the first device 400, having a lower degree of precision than that of the second device 500, is used to determine on the work table 100, which is quite extensive given the dimensions of the part "P", a "general" position of the part "P". Subsequently, the second device 500, having a higher degree of precision than the first one needs to be positioned closer to the part "P" to determine the position, is moved on the basis of the position detected by the first device 400. Once positioned, as shown in Figures 2 and 2A, the second device 500 precisely determines the position of the part "P" so that the machining unit 200 can be appropriately positioned with respect to the part "P" and the machining head 300 can operate on it.

In the illustrated embodiment, the second device 500 is integral with the machining unit 200. In such a situation, the machining unit 200 is moved with the second device 500 on the basis of the position determined by the first device 400 and the second device 500 is moved with the machining unit 200 on the basis of the position derived from the second device 500. Preferably, the second device 500 is selectable from one or more of: mechanical sensor, high-resolution camera, laser sensor and LIDAR.

In other words, the second device 500 could be a device that operates in contact or without contact with the part "P".

Preferably, the second device 500 comprises a position measuring device configured to measure a position of at least a portion of the part "P" and the machining centre "C" is configured to process the at least one measured position to obtain the position of the part "P" on the work table 100.

Even more preferably, the second device 500 is configured to measure a plurality of positions relative to a plurality of portions of the part "P" and the machining centre "C" is configured to process said plurality of measured positions to obtain the position of the part "P" on the work table 100.

The machining centre "C" is also configured to process the plurality of measured positions to determine the geometry, that is, shape and dimensions, of the part "P".

In use, the part "P" is positioned on the work table 100. In this situation, the first device 400 is able to determine the position of the part "P" with the first degree of precision. In particular, the first device 400 allows, despite the large dimensions of the work table 100 and the part "P", identification of the location of the part "P" on the work table 100 so as to obtain "general position data" of the part "P".

Based on the position determined by the first device 400, the second device 500 is moved with respect to the part "P".

In fact, since the second device 500 has a higher degree of precision than that of the first device 400, the second device 500 needs, in order to determine the position of the part "P", to be placed near said part "P". In such a situation, the position determined by the first device 400 is exploited to move the second device 500.

In the illustrated embodiment, since the second device 500 is integral with the machining unit 200, when the second device 500 is moved, the machining unit 200 is also moved, in particular it is slide along the tracks 600, more in particular along one or more of the three Cartesian axes, even more in particular along one or more of the three Cartesian axes and/or one or more of the two rotation axes.

At the end of the above-mentioned movement, the second device 500 determines the position of the part "P" with the second degree of precision. On the basis of this determination, the machining unit 200 is moved with respect to the part "P" so as to be placed in a position such as to allow a correct machining of the part "P".

Preferably, on the basis of the determination made by the second device 500, the machining head 300 of the machining unit 200 is moved to carry out the machining operation on the part "P".

A further aim of the present invention is a method for determining the position of a part "P" on a work table 100 of a machining centre "C" for machining a part "P" made of wood, or the like.

In particular, the machining centre "C" is made as described above.

The method comprises a step of determining a position of the part "P" by means of a first device 400 configured to determine the position of the part "P" on the work table 100 with a first degree of precision.

Preferably, the step of determining the position of the part "P" by means of the first device 400 may comprise a step of projecting, in a predetermined position of the work table 100, an image defining a positioning area of the part "P", in particular an image having the shape and size of the part "P" and a sub-step of positioning the part "P" at the predetermined position.

Furthermore, the step of determining the position of the part "P" by means of the first device 400 may comprise a sub-step of positioning the part "P" on the work table, for example in correspondence with an image defining an area of positioning of the part "P" projected in a predetermined position of the work table 100, in particular an image having the shape and size of the part "P", and a step of moving the image in correspondence with the part "P".

The method further comprises, preferably subsequent to the step of determining the position of the part "P" by means of the first device 400, a step of determining a position of the part "P", by means of a second device 500 configured to determine the position of the part "P" on the work table 100 with a second degree of precision greater than the first degree of precision.

Preferably, the step of determining the position of the part "P" by the second device 500 comprises a sub-step of measuring a plurality of positions relative to a plurality of portions of the part "P" and a sub-step of processing the plurality of measured positions to determine the geometry of the part "P" and the position of the part "P".

The method further comprises a step of deriving, on the basis of the position of the part "P" determined by the first device 400, the movement instructions for the second device 500 and a step of deriving, on the basis of the position of the part "P" determined by the second device 500, the movement instructions for a machining unit 200 of the machining centre "C" movable with respect to the part "P" and configured to carry out at least one machining operation on the part "P".

Preferably, between the step of deriving movement instructions for the second device 500 and the step of deriving movement instructions for the machining unit 200, the method comprises a step of moving the second device 500 with respect to the part "P" on the basis of the position of the part "P" determined by the first device 400.

Preferably, after the step of deriving the movement instructions for the machining unit 200, the method comprises a step of moving the machining unit 200 with respect to the part "P" on the basis of the position determined by the second device 500 and a step of carrying out the at least one machining operation.

In use, therefore, the position of the part "P" on the work table 100 is determined by the first device 400 with the first degree of precision. Based on this determination, the second device 500 is moved towards the part "P" to be placed near the part "P" itself.

Subsequently, the second device 500 determines the position of the part "P" with the second degree of precision greater than the first degree of precision, that is, it determines the position of the part "P" more accurately. On the basis of this determination, the machining unit 200 is moved so as to be positioned, with respect to the part "P", in a position in which the machining is carried out on the part "P" in a precise manner.

The invention achieves the preset aims eliminating the drawbacks of the prior art.

In particular, the combined use of two devices, having different degrees of precision in determining the position of the part, allows the machining unit to be positioned with respect to the part more precisely so that the machining carried out is more precise.

## Claims

1. A machining centre (C) for machining a wooden part (P), or the like, comprising:
- a work table (100) for supporting said part (P);
- a machining unit (200), movable relative to the part (P) and configured to perform at least one machining process on said part (P);
- a first device (400), configured to determine a position of said part (P) on said work table (100), said first device (400) being **characterized by** a first degree of precision; and
- a second device (500), movable relative to said part (P) based on the position of the part (P) determined by said first device (400), said second device (500) being configured to determine the position of said part (P) on said work table (100), said second device (500) being **characterized by** a second degree of precision, greater than said first degree of precision; and wherein said machining unit (200) is movable relative to the part (P) based on the position of the part (P) determined by said second device (500) in order to perform said at least one machining process.

2. The machining centre (C) according to claim 1, wherein said first device (400) works without contacting said part (P).

3. The machining centre (C) according to claim 1 or 2, wherein said first device (400) is selectable from one or more of the following devices: optical sensor, laser sensor, photocell, video camera, image projector.

4. The machining centre (C) according to claim 3, wherein said first device (400) comprises an image projector (400a), which, when the work table (100) is at a predetermined position, is configured to project an image defining a positioning area of said part (P), in particular an image having the shape and size of said part (P) so as to guide the operator to position said part (P) at said predetermined position.

5. The machining centre (C) according to claim 3, wherein said first device (400) comprises an image projector (400a), which, when the work table (100) is at a predetermined position, is configured to project an image defining a positioning area of said part (P), in particular an image having the shape and size of said part (P), and wherein the machining centre (C) is configured to be able to move said image on the work table (100) so as to overlay said image on said part (P) when it is positioned on the work table (100).

6. The machining centre (C) according to any of claims 1 to 3, wherein said first device (400) comprises a position gauge configured to measure a position of at least a portion of said part (P), and wherein said machining centre (C) is configured to process said measured position to obtain said position of said part (P) on said work table (100).

7. The machining centre (C) according to any one of the preceding claims, wherein said machining unit (200) is positioned above the work table (100), and wherein said first device (400) is positioned above the work table (100), in particular above said machining unit (200), so as not to interfere with said machining unit (200) while said machining unit (200) is machining said part (P).

8. The machining centre (C) according to any one of the preceding claims, wherein said second device (500) is selectable from the following: mechanical contact sensor, high-resolution camera, laser sensor and LIDAR sensor.

9. The machining centre (C) according to any one of the preceding claims, wherein said second device (500) comprises a position gauge configured to measure a position of at least a portion of said part (P), and wherein said machining centre (C) is configured to process said measured position to obtain the position of said part (P) on the work table (100).

10. The machining centre (C) according to claim 9, wherein said position gauge of said second device (500) is configured to measure a plurality of positions relating to a plurality of portions of said part (P), and wherein said machining centre (C) is configured to process said plurality of measured positions to determine the geometry of said part (P) and the position of said part (P) on the work table (100).

11. The machining centre (C) according to any one of the preceding claims, wherein said second device (500) is integral with said machining unit (200).

12. A method for determining the position of a part (P) on a work table (100) of a machining centre (C) for machining a wooden part (P), or the like, in particular a machining centre (C) according to one or more of the preceding claims, comprising the following steps:
- determining a position of the part (P) on the work table (100) by means of a first device (400), configured to determine the position of said part (P) to a first degree of precision;
- determining a position of the part (P) on the work table (100) by means of a second device (500), configured to determine the position of said part (P) to a second degree of precision, greater than the first degree of precision, said second device (500) being movable relative to said part (P);
- based on the position of the part (P) determined by the first device (400), deriving movement instructions for the second device (500);
- based on the position of the part (P) determined by the second device (500), deriving movement instructions for a machining unit (200) of the machining centre (C), movable relative to said part (P) and configured to perform at least one machining process on said part (P).

13. The method according to claim 12, comprising, between the step of deriving movement instructions for the second device (500) and the step of deriving movement instructions for the machining unit (200), a step of moving said second device (500) relative to the part (P) based on the position of the part (P) determined by the first device (400).

14. The method according to claim 13, comprising, after the step of deriving movement instructions for the machining unit (200), a step of moving said machining unit (200) relative to said part (P) based on the position determined by said second device (500) and a step of performing said at least one machining process.

15. The method according to any one of claims 12 to 14, wherein said step of determining the position of the part (P) by means of the first device (400) comprises the following sub-steps:
- when the work table (100) is at a predetermined position, projecting an image defining a positioning area of said part (P), in particular an image having the shape and size of said part (P);
- positioning said part (P) at said predetermined position.

16. The method according to any one of claims 12 to 14, wherein said step of determining the position of the part (P) by means of the first device (400) comprises the following sub-steps:
- when the work table (100) is at a predetermined position, projecting an image defining a positioning area of said part (P), in particular an image having the shape and size of said part (P);
- positioning said part (P) on the work table (100), in particular at said image;
- moving said image to said part (P) so as to overlay said image with said part (P).

17. The method according to any one of claims 12 to 16, wherein said step of determining the position of the part (P) by means of the second device (500) comprises the following sub-steps:
- measuring a plurality of positions of a plurality of portions of said part (P);
- processing said plurality of measured positions to determine the position of said part (P) and the geometry of said part (P).
